# EUROPÄISCHE PATENTSCHRIFT

(11) **EP 1 656 541 B1**
(45) Veröffentlichungstag und Bekanntmachung des Hinweises auf die Patenterteilung: **11.11.2009**
(21) Anmeldenummer: 04764018.0
(22) Anmeldetag: 12.08.2004
(51) Int. Cl.: G01M 9/06, G01M 17/007

(54) **VERSUCHSSTAND UND VERFAHREN FÜR AERODYNAMISCHE MESSUNGEN AN FAHRZEUGEN**
TEST BENCH AND METHOD FOR CARRYING OUT AERODYNAMIC MEASUREMENTS ON VEHICLES
BANC D'ESSAI ET PROCEDE POUR EFFECTUER DES MESURES AERODYNAMIQUES SUR DES VEHICULES

(30) Priorität: 22.08.2003 DE 10338638
(43) Veröffentlichungstag der Anmeldung: 17.05.2006
(73) Patentinhaber: Bayerische Motoren Werke Aktiengesellschaft, 80809 München (DE)
(72) Erfinder: EBELING, Welf, 80637 Muenchen (DE); TACKE, Ulrich, 81475 Muenchen (DE); EBBINGHAUS, Karlheinz, 80992 Muenchen (DE); KERSCHBAUM, Hans, 85669 Pastetten (DE); LITZ, Bradley C., Chaska, Minnesota, 55318 (US)
(74) Vertreter: Schernhammer, Herbert
(86) Internationale Anmeldenummer: PCT/EP2004/009014
(87) Internationale Veröffentlichungsnummer: WO 2005/022108

(56) Entgegenhaltungen:
- EP-A- 0 393 505
- DE-A- 19 527 742
- DE-C- 3 715 460
- GB-A- 273 742

## Beschreibung

Die Erfindung betrifft einen Versuchsstand für aerodynamische Messungen an Fahrzeugen mit mindestens einer Aufstandsfläche zum Aufnehmen des Fahrzeuggewichts, einem Laufband zum Simulieren der sich unter dem Fahrzeug bewegenden Fahrbahn und mindestens einer Messeinrichtung zum Ermitteln von auf das Fahrzeug wirkenden Kräften. Ferner betrifft die Erfindung ein aerodynamisches Messverfahren an Fahrzeugen mit den Schritten: Aufnehmen des Fahrzeuggewichts an mindestens einer Aufstandsfläche, Simulieren der sich unter dem Fahrzeug bewegenden Fahrbahn mit einem Laufband und Ermitteln von auf das Fahrzeug wirkenden Kräften.

Versuchsstände der oben genannten Art werden in der Fahrzeugindustrie insbesondere bei Serienfahrzeugen und bei Rennsportfahrzeugen zum Messen von aerodynamischen Luftwiderstandskräften in einem Windkanal verwendet.

Bei solchen Versuchsständen sind sogenannte Einbandsysteme bekannt, die externe Kraftmessvorrichtungen für Kräfte parallel zur Fahrbahnebene in einem Fahrzeugfixiersystem, insbesondere seitlich neben einem Laufrad des Fahrzeugs aufweisen. Zum Messen von Auftriebskräften sind an den Laufrädern in einem Laufbandtisch mehrere Wägezellen integriert, die Radlasten durch das Laufband hindurch messen.

Ferner sind sogenannte Fünf-Bandsysteme bekannt, die vier in einer Windkanalwaage integrierte Radlaufbänder und ein dazwischen angeordnetes Laufband zur Simulation der bewegten Fahrbahn aufweisen.

Bei den bekannten Einbandsystemen werden durch die externen Mess- und Fixiervorrichtungen die aerodynamischen Luftwiderstandskräfte zusammen mit hohen Rollreibkräften ermittelt. Rollreibkräfte können jedoch nur mit begrenzter Genauigkeit durch Kalibriermessungen ermittelt werden. Bei Einbandsystemen werden unter Umständen aerodynamische Seitenkräfte fehlerhaft ermittelt, da sie teilweise auf das Laufband übertragen und damit die Kraftmesswerte an den Mess- und Fixiervorrichtungen reduziert werden. Das Einbandsystem hat insgesamt Schwächen bei der Reproduzierbarkeit der aerodynamischen Längs- und Seitenkräfte und führt zu einem erheblichen Versuchsaufwand um die Messergebnisse statistisch abzusichern.

Bekannte Fünf-Bandsysteme simulieren die sich unter dem Fahrzeug bewegende Fahrbahn durch ein vergleichsweise schmales Mittellaufband und die vier Radlaufbänder. Bei dieser Simulationstechnik entstehen Strömungsstörungen an den Laufbandkanten des Mittellaufbandes und daher ist die Zuströmung von Luft im Radbereich des zu messenden Fahrzeugs teilweise gestört. Die Schwächen des Fünf-Bandsystems bei der Fahrbahnsimulation sind bei Serienfahrzeugen mit großem Bodenabstand und in der Karosserie integrierten Rädern in der Regel noch tolerierbar, bei Rennsportfahrzeugen mit geringem Bodenabstand führen die Simulationsfehler jedoch unter Umständen zu unzureichenden Ergebnissen.

Es ist die Aufgabe der Erfindung einen Versuchsstand und ein Verfahren für aerodynamische Messungen an Fahrzeugen bereitzustellen, bei dem die oben genannten Nachteile überwunden sind und bei denen auf vergleichsweise kostengünstige und leicht handhabbare Weise die sich unter dem Fahrzeug bewegende Fahrbahn richtig simuliert werden kann.

Die Aufgabe ist erfindungsgemäß mit einem gattungsgemäßen Versuchsstand gelöst, bei dem mit dem Laufband zum Simulieren der Fahrbahn zugleich Aufstandsflächen zum Aufnehmen des Fahrzeuggewichts geschaffen sind, bei dem das einzige Laufband insgesamt auf einer Waagenplatte oder einem Wagentisch angeordnet ist, die bzw. der auf einer Lagerung relativ zu einer ortsfesten Umgebung gelagert ist, und bei dem die mindestens eine Messeinrichtung die auf das Fahrzeug wirkenden Kräfte anhand der Bewegungstendenz bzw. Bewegung der Waagenplatte relativ zu der ortsfesten Umgebung ermittelt. Die Aufgabe ist ferner mit einem aerodynamischen Messverfahren der eingangs genannten Art gelöst, das die folgenden Schritte umfasst : Ausbilden der Aufstandsflächen mit dem Laufband zum Simulieren der sich unter dem Fahrzeug bewegenden Fahrbahn, Abstützen des gesamten und einzigen Laufbandes auf einer Waagenplatte und Lagern der Waagenplatte relativ zu einer ortsfesten Umgebung, sowie Ermitteln von auf das Fahrzeug wirkenden Kräfte anhand der Bewegungstendenz der Waagenplatte relativ zu der ortsfesten Umgebung.

Bei dem erfindungsgemäßen Versuchsstand ist ein vergleichsweise großes Laufband auf einer Waagenplatte bzw. einen Wagentisch montiert und als Gesamtheit gegenüber einer ortsfesten Umgebung beweglich gelagert. Die bewegliche Waagenplatte ist mit mindestens einer Messeinrichtung gekoppelt, mittels der die zwischen der Waagenplatte und der ortsfesten Umgebung sich während eines Versuchs ergebenden Kräfte ermittelt werden können. Die derart ermittelten Kräfte entsprechen den aerodynamischen Widerstandskräften des Fahrzeugs während des Versuchs.

Im Vergleich zu einem Einbandsystem werden erfindungsgemäß auftretende, störende Rollreibkräfte von dem Laufband und seinem Antrieb kompensiert, weil das erfindungsgemäße Laufband insgesamt auf einem Wagentisch bzw. einer Waagenplatte abgestützt oder in diese integriert ist. Aerodynamische Längs- und Seitenkräfte werden hingegen vom Fahrzeug über das Laufband auf die Waagenplatte übertragen. Die Kräfte können erfindungsgemäß relativ zur ortsfesten Umgebung der Waagenplatte leicht ermittelt werden.

Störende Luftreibungskräfte auf der Laufbandfläche entstehen erfindungsgemäß nicht, weil mit nur einem Laufband gearbeitet und daher jegliche Strömungskanten zwischen Laufbändern vermieden sind. Darüber hinaus können Luftreibungskräfte auf der Laufbandfläche ausgeschlossen werden, indem die Laufbandgeschwindigkeit und die Luftgeschwindigkeit gleich gewählt werden.

Die durch eine Aufspannvorrichtung des Fahrzeugs entstehenden aerodynamischen Kräfte können erfindungsgemäß durch Abspannen mit dünnen Seilen vernachlässigt werden, oder es können Abspannstangen verwendet werden, an denen durch Kraftmessungen unter Windlast ohne Fahrzeug die aerodynamischen Kräfte ermittelbar sind.

Die Erfindung verbindet vorteilhaft die vergleichsweise wirklichkeitsnahe Simulation des Einbandsystems mit den Vorteilen der guten Reproduzierbarkeit der aerodynamischen Kräfte bei einem Fünf-Bandsystem.

Zwar ist aus der DE 195 27 742 A1 eine Windkanalwaage bekannt, die ein Laufband aufweist, das eine Aufstandsfläche für ein Fahrzeugrad bildet. Die Windkanalwaage hat eine Waagenplatine mit einem Elektromotor, der das Laufband antreibt. Wägezellen innerhalb der Waagenplatine ermöglichen eine Bestimmung des Reaktionsmoments des Elektromotors. Innerhalb der Windkanalwaage ist die Waagenplatine ihrerseits wiederum von Wägezellen aufgenommen, so dass die am Fahrzeugrad auftretenden Kräfte und Momente ermittelt werden können. Gemäß der DE 195 27 742 A1 werden durch Vergleichsmessungen (ohne/mit Wind, bei inaktivem/aktivem Radantrieb) die Reaktionsmomente des Elektromotors sowie aerodynamische Kräfte und Momente an dem Fahrzeugrad gemessen, um die Lüfterwirkung der Radfelge des betreffenden Fahrzeugrades und das sich daraus ergebende und aufzubringende Lüftermoment bzw. die sich daraus ableitende Lüfterleistung zu ermitteln.

Bei der Windkanalwaage gemäß der DE 195 27 742 A1 handelt es sich um eine allgemein bekannte Vorrichtung zur Messung von Kräften und Momenten an einem Fahrzeugrad, die keinen Hinweis auf die erfindungsgemäße Windkanalwaage geben kann, mit der die durch die Anordnung eines einzigen Laufbandes, auf dem das Fahrzeug abgestellt wird, auf einer Waagenplatte und Lagern der Waagenplatte relativ zur ortsfesten Umgebung, anhand der Bewegungstendenz der Waagenplatte die aerodynamischen Widerstandskräfte des Fahrzeugs gemessen werden können.

Bei einer vorteilhaften Weiterbildung des erfindungsgemäßen Versuchsstandes für aerodynamische Messungen ist mit der Lagerung die Waagenplatte relativ zur ortsfesten Umgebung verschiebbar, insbesondere schwimmend gelagert. Alternativ oder zusätzlich zu einer Schiebebewegung kann die erfindungsgemäße Waagenplatte mit ihrem darauf oder darin angeordneten Laufband vorteilhaft auf schwenkbaren Stützen aufgestellt oder hängend gelagert sein. Ziel der Lagerung ist stets eine im Wesentlichen reibungsfreie Bewegung der Waagenplatte relativ zur ortsfesten Umgebung.

Die Lagerung der Waagenplatte kann für eine solche reibungsarme Bewegung auf kostengünstige Weise mit mindestens einem hydrostatischen Lager gestaltet sein.

Ferner ist eine Lagerung der erfindungsgemäßen Waagenplatte mit mindestens einem piezoelektrischen Kraftaufnehmer sinnvoll, der insbesondere zugleich als Messeinrichtung zum Ermitteln von Kräften der Waagenplatte relativ zu der ortsfesten Umgebung ausgebildet sein kann.

Die mindestens eine Messeinrichtung zum Ermitteln von auf das Fahrzeug wirkenden Kräften ist erfindungsgemäß vorteilhaft mit mindestens einer Wägezelle zum Ermitteln von Kräften an der Waagenplatte parallel zur Fahrbahnebene ausgebildet. Die wichtigen an einem Fahrzeug wirkenden aerodynamischen Längs- und Seitenkräfte können mit nur drei solchen Wägezellen ermittelt werden, indem eine der Zellen die Kraft der Bewegung der Waagenplatte in Fahrtrichtung und zwei weitere Wägezellen jeweils Kräfte der Waagenplatte quer zur Fahrtrichtung ermitteln.

Mit dem erfindungsgemäßen Versuchsstand können vorteilhaft auch aerodynamische Auftriebskräfte an dem zu messenden Fahrzeug ermittelt werden. Für das Messen der Auftriebskräfte ist vorteilhaft mindestens eine Wägezelle vorgesehen, mit der Kräfte in Richtung der Hochachse des Fahrzeugs an der mindestens einen Aufstandsfläche des Fahrzeugs zwischen dem Fahrzeug und der Waagenplatte ermittelt werden können. An dem erfindungsgemäßen Versuchsstand ist das zu messende Fahrzeug vorteilhaft mit mindestens einer Fixiereinrichtung auf dem Laufband relativ zur Waagenplatte festgelegt. Die Fixiereinrichtung überträgt aerodynamische Längs- und Seitenkräfte auf die Waagenplatte, wo sie mittels der oben genannten Wägezellen relativ zur ortsfesten Umgebung gemessen werden können. Darüber hinaus ist mit der Fixiereinrichtung das Fahrzeug auf dem erfindungsgemäß nur einen Laufband gegen Verrutschen und Herabwandern gesichert.

Nachfolgend wird ein Ausführungsbeispiel eines erfindungsgemäßen Versuchsstandes für aerodynamische Messungen anhand der beigefügten schematischen Zeichnungen näher erläutert. Es zeigt:
- Fig. 1: eine stark vereinfachte Seitenansicht eines Ausführungsbeispiels eines erfindungsgemäßen Versuchsstandes für aerodynamische Messungen und
- Fig. 2: eine stark vereinfachte Draufsicht auf den Versuchsstand gemäß Fig. 1.

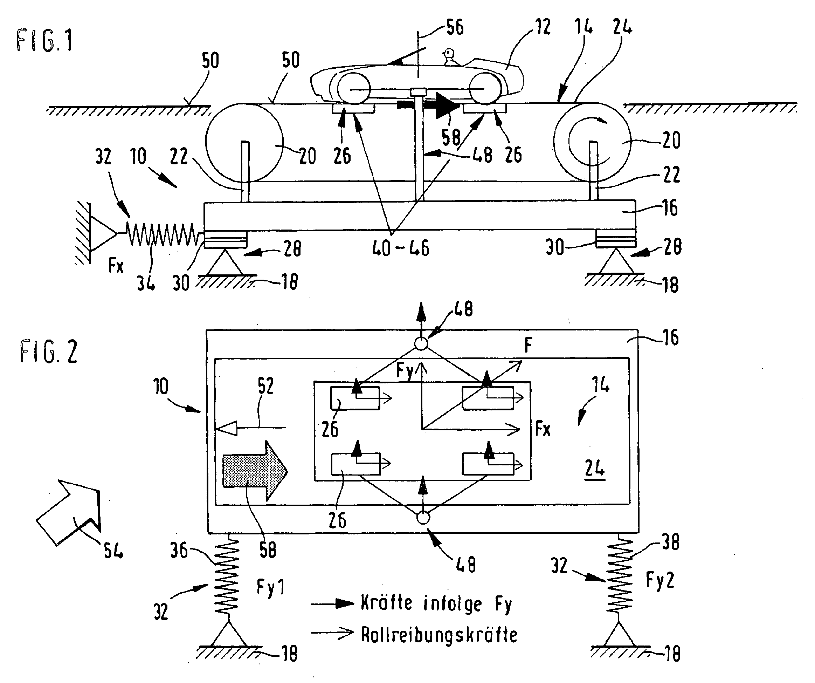

In den Fign. 1 und 2 ist ein Versuchsstand 10 für aerodynamische Messungen an einem Fahrzeug 12 veranschaulicht, der als wesentliche Bauelemente ein Laufband 14 und eine darunter liegende Waagenplatte 16 umfasst. Die Waagenplatte 16 ist relativ zu einer ortsfesten Umgebung 18 abgestützt.

Das Laufband 14 ist mit zwei Rollen 20 gebildet, die sich parallel zueinander erstrecken und an Rollenstützen 22 auf der Waagenplatte 16 abgestützt sind. Die Rollen 20 sind von einem Band 24 umschlossen, mit dem insgesamt vier Aufstandsflächen 26 zum Abstützen des auf dem Laufband 14 abgestellten Fahrzeugs 12 ausgebildet sind.

Die Waagenplatte 16 ist im Wesentlichen rechteckig und an ihren Eckbereichen mit insgesamt vier Lagerungen 28 an der ortsfesten Umgebung 18 abgestützt. Die Lagerungen 28 sind mit hydrostatischen Lagern 30, sogenannten Schwimmplatinen gestaltet, die in gewissen Grenzen ein nahezu reibungsfreies Verschieben der Waagenplatte 16 relativ zur ortsfesten Umgebung 18 ermöglichen.

An dem Versuchsstand 10 sind mehrere Messeinrichtungen 32 zum Ermitteln der auf das Fahrzeug 12 wirkenden aerodynamischen Kräfte während eines Versuchs angeordnet. Die Messeinrichtungen 32 umfassen dabei insgesamt sieben Wägezellen 34 bis 46.

Wie oben erwähnt ist auf dem Versuchsstand 10 ein zu messendes Fahrzeug 12 auf den Aufstandsflächen 26 des Laufbandes 14 abgestellt. Mit Hilfe einer Fixiereinrichtung 48 wird das derart abgestellte Fahrzeug 12 auf einer simulierten Fahrbahnebene 50 gegen ein Herabwandern vom Versuchsstand 12 befestigt.

Unter dem Fahrzeug 12 kann mit Hilfe der Rollen 20 das Band 24 in Umlauf gebracht werden, sodass für das Fahrzeug 12 eine Fahrtrichtung 52 simuliert wird. Mit Hilfe eines nicht dargestellten Windkanals kann an dem auf dem Versuchsstand 10 angeordneten Fahrzeug 12 Wind (siehe Windrichtungspfeil 54 in Fig. 2) aufgebracht und simuliert werden. Die durch den aufgebrachten Wind am Fahrzeug 12 wirkenden Längs- und Seitenkräfte (Fx und Fy), Momente und Auftriebskräfte (Fz) werden dann während eines Versuchs mit den erfindungsgemäß angeordneten Messeinrichtungen 32 ermittelt.

Um bei der Ermittlung die sich relativ zum Fahrzeug 12 bewegende Fahrbahn vollständig simulieren zu können und gleichzeitig auf kostengünstige Weise eine hochgenaue Messung von Widerstands-, Seiten-, und Auftriebskräften ohne störende Rollreibungskräfte zu erzielen, sind an der schwimmend gelagerten Waagenplatte 16 mit dem darauf angeordneten einzigen Laufband 14 die insgesamt sieben Wägezellen 34 bis 46 vorgesehen. Von diesen Wägezellen ist eine erste Wägezelle 34 zum Messen von Kräften Fx zwischen der Waagenplatte 16 und der ortsfesten Umgebung in Fahrtrichtung 52 ausgebildet. Zwei weitere Wägezellen 36 und 38 sind zum Messen von Kräften Fy zwischen der Waagenplatte 16 und der ortsfesten Umgebung 18 quer zur Fahrtrichtung 48 vorgesehen.

Mit den derart angeordneten Wägezellen 34 bis 38 werden nur die am Fahrzeug 12 wirkenden Windkräfte bzw. -momente ermittelt, während Rollreibkräfte des Fahrzeugs 12 auf dem Band 24 über die Fixiereinrichtung 48 an die Waagenplatte 16 abgeleitet werden und nicht in die Messung der aerodynamischen Kräfte und Momente eingehen.

Die auf das Fahrzeug 12 wirkenden und insbesondere auch durch den Fahrtwind begründeten Auftriebskräfte Fz werden durch die oben erwähnten insgesamt vier Wägezellen 40 bis 46 ermittelt, die unmittelbar an den Rädern des Fahrzeugs 12 unter dem Band 24 an den einzelnen Aufstandsflächen 26 angeordnet sind. Die Wägezellen 40 bis 46 ermitteln Kräfte zwischen dem Laufband 14 und dem Fahrzeug 12 in paralleler Richtung zur Hochachse 56 des Fahrzeugs 12. Alternativ oder zusätzlich zu den vier Wägezellen 40 bis 46 zum Messen von Kräften Fz in im Wesentlichen vertikaler Richtung können an den beiden Fixiereinrichtungen 48, die beiderseits des Fahrzeugs 12 angeordnet sind, jeweils eine einzelne Wägezelle an der zugehörigen Fixiereinrichtung 48 angeordnet sein, um Kräfte parallel zur Hochachse 54 des Fahrzeugs 12 zwischen dem Fahrzeug 12 und der Waagenplatte 16 zu ermitteln.

Während sich die Oberseite des Bandes 24 in eine Richtung 58 entgegen der Fahrtrichtung 52 bewegt, wirken an den Rädern des Fahrzeugs 12 Rollreibkräfte. Diese Rollreibkräfte werden von dem Antrieb des Bandes 24 bzw. der Rollen 20 kompensiert.

An dem Fahrzeug 12 wirkt während eines Versuches ferner gemäß dem Windrichtungspfeil 54 eine Windkraft F. Diese Windkraft F lässt sich in die beiden Kraftkomponenten Längskraft Fx und Seitenkraft Fy aufteilen. Die Windkraftkomponenten Fx und Fy führen zu einer Stützkraft des Fahrzeugs 12 an der Fixiereinrichtung 48. Die Kräfte werden über die Fixiereinrichtung 48 auf die Waagenplatte 16 und von dort auf die ersten und zweiten Wägezellen 34 bis 38 für die Kräfte Fx, Fy1 und Fy2 übertragen. Auf diese Weise werden mit den Wägezellen 34 bis 38 die aerodynamischen Längs- und Seitenkräfte am Fahrzeug 12 gemessen.

Am Fahrzeug 12 wirken bedingt durch die Windkraft F auch Auftriebskräfte. Diese Auftriebskräfte werden mit Hilfe der Wägezellen 40 bis 46 unmittelbar unter den Rädern des Fahrzeugs 12 ermittelt.

### Bezugszeichenliste:

- 10: Versuchsstand
- 12: Fahrzeug
- 14: Laufband
- 16: Waagenplatte
- 18: ortsfeste Umgebung
- 20: Rolle
- 22: Rollenstütze
- 24: Band
- 26: Aufstandsfläche
- 28: Lagerung
- 30: hydrostatisches Lager
- 32: Messeinrichtung
- 34: erste Wägezelle Fx
- 36: zweite Wägezelle Fy1
- 38: dritte Wägezelle Fy2
- 40: vierte Wägezelle Fz1
- 42: fünfte Wägezelle Fz2
- 44: sechste Wägezelle Fz3
- 46: siebte Wägezelle Fz4
- 48: Fixiereinrichtung
- 50: Fahrbahnebene
- 52: Fahrtrichtung
- 54: Windrichtung
- 56: Hochachse
- 58: Bewegungsrichtung der Oberseite des Bandes

## Patentansprüche

1. Versuchsstand (10) für aerodynamische Messungen an Fahrzeugen (12) mit mindestens einer Aufstandsfläche (26) zum Aufnehmen des Fahrzeuggewichts, einem Laufband (14) zum Simulieren der sich unter dem Fahrzeug (12) bewegenden Fahrbahn und mindestens einer Messeinrichtung (32) zum Ermitteln von auf das Fahrzeug (12) wirkenden Kräften,
**dadurch gekennzeichnet, dass**
- ein einziges Laufband (14) zum Simulieren der Fahrbahn vorgesehen ist, dessen Breite größer ist als die Breite des Fahrzeugs (12), so dass auf dem Laufband (14) zugleich Aufstandsflächen (26) zum Aufnehmen des Fahrzeuggewichts des auf dem Laufband (14) abgestellten Fahrzeugs (12) geschaffen sind,
- das einzige Laufband (14) insgesamt auf einer Waagenplatte (16) angeordnet ist, die auf einer Lagerung (28) relativ zu einer ortsfesten Umgebung (18) gelagert ist, und
- die mindestens eine Messeinrichtung (32) die auf das Fahrzeug (12) wirkenden Kräfte anhand der Bewegungstendenz der Waagenplatte (16) relativ zu der ortsfesten Umgebung (18) ermitteln kann.

2. Versuchsstand nach Anspruch 1,
**dadurch gekennzeichnet, dass** mit der Lagerung (28) die Waagenplatte (16) relativ zur ortsfesten Umgebung (18) verschiebbar, insbesondere schwimmend gelagert ist.

3. Versuchsstand nach Anspruch 1 oder 2,
**dadurch gekennzeichnet, dass** die Lagerung (28) der Waagenplatte (16) mit mindestens einem hydrostatischen Lager (30) gestaltet ist.

4. Versuchsstand nach einem der Ansprüche 1 bis 3,
**dadurch gekennzeichnet, dass** die Lagerung (28) der Waagenplatte (16) mit mindestens einem piezoelektrischen Kraftaufnehmer gestaltet ist, der insbesondere zugleich als Messeinrichtung zum Ermitteln von Kräften der Waagenplatte (16) relativ zu der ortsfesten Umgebung (18) ausgebildet ist.

5. Versuchsstand nach einem der Ansprüche 1 bis 4,
**dadurch gekennzeichnet, dass** die mindestens eine Messeinrichtung (32) zum Ermitteln von auf das Fahrzeug wirkenden Kräften mindestens eine Wägezelle (34 bis 38) zum Ermitteln von Kräften parallel zur Fahrbahnebene (50) umfasst, insbesondere von mindestens einer Kraft (Fx) in Fahrtrichtung (52) und/oder mindestens zwei Kräften (Fy1, Fy2) quer zur Fahrtrichtung (52).

6. Versuchsstand nach einem der Ansprüche 1 bis 5,
**dadurch gekennzeichnet, dass** die mindestens eine Messeinrichtung (32) zum Ermitteln von auf das Fahrzeug wirkenden Kräften mindestens eine Wägezelle (40 bis 46) zum Ermitteln von Kräften (Fz) in Richtung der Hochachse (56) des Fahrzeugs (12) an den Aufstandflächen (26) umfasst und diese Wägezelle (40 bis 46) insbesondere Kräfte (Fz) des Fahrzeugs (12) relativ zu der Waagenplatte (16) ermittelt.

7. Versuchsstand nach einem der Ansprüche 1 bis 6,
**dadurch gekennzeichnet, dass** mindestens eine Fixiereinrichtung (48) zum Befestigen des Fahrzeugs (12) vorgesehen ist und die Fixiereinrichtung (48) des Fahrzeugs (12) relativ zur Waagenplatte (16) festlegt.

8. Aerodynamisches Messverfahren an Fahrzeugen (12) mit den Schritten :
Aufnehmen des Fahrzeuggewichts an mindestens einer Aufstandsfläche (26), Simulieren der sich unter dem Fahrzeug (12) bewegenden Fahrbahn mit einem Laufband (14) und Ermitteln von auf das Fahrzeug (12) wirkenden Kräften,
**gekennzeichnet durch** die Schritte:
- Ausbilden der Aufstandflächen (26) mit dem Laufband (14) zum Simulieren der sich unter dem Fahrzeug (12) bewegenden Fahrbahn, indem die Breite des Laufbandes (14) größer ist als die Breite des Fahrzeugs (12),
- Abstützen des gesamten und einzigen Laufbandes (14) auf einer Waagenplatte (16) und Lagern der Waagenplatte (16) relativ zu einer ortsfesten Umgebung (18), sowie
- Ermitteln der auf das Fahrzeug (12) wirkenden Kräfte anhand der Bewegungstendenz der Waagenplatte (16) relativ zu der ortsfesten Umgebung (18).

9. Verfahren nach Anspruch 8,
**gekennzeichnet durch** ein verschiebbares, insbesondere schwimmendes Lagern der Waagenplatte (16) relativ zur der ortsfesten Umgebung (18).

10. Verfahren nach Anspruch 8 oder 9,
**dadurch gekennzeichnet, dass** das Ermitteln von auf das Fahrzeug (12) wirkenden Kräften ein Ermitteln von Kräften der Waagenplatte (16) relativ zu der ortsfesten Umgebung (18) parallel zu der Fahrbahnebene (50) umfasst, insbesondere von mindestens einer Kraft (Fx) in Fahrtrichtung (52) und/oder mindestens zwei Kräften (Fy1, Fy2) quer zur Fahrtrichtung (52).

11. Verfahren nach einem der Ansprüche 8 bis 10,
**dadurch gekennzeichnet, dass** das Ermitteln von auf das Fahrzeug (12) wirkenden Kräften ein Ermitteln von Kräften (Fz) des Fahrzeugs (12) relativ zu der ortsfesten Umgebung (18) in Richtung der Hochachse (56) des Fahrzeugs an den Aufstandflächen (26), insbesondere ein Ermitteln solcher Kräfte (Fz) des Fahrzeugs (12) relativ zu der Waagenplatte (16) umfasst.

12. Verfahren nach einem der Ansprüche 8 bis 10,
**gekennzeichnet durch** ein Befestigen des Fahrzeugs (12) relativ zur Waagenplatte (16).

## Claims

1. A test stand (10) for aerodynamic measurements on vehicles (12), comprising at least one contact surface (26) for receiving the weight of the vehicle, a moving pavement (14) for simulating the road moving under the vehicle (12), and at least one measuring device (32) for determination of forces acting on the vehicle (12),
**characterised in that**
- a single moving pavement (14) for simulating the road is provided, its width being greater than the width of the vehicle (12), so that contact surfaces (26) for receiving the weight of the vehicle (12) parked on the moving pavement (14) are provided thereon,
- the single moving pavement (14) in its entirety is disposed on the platform (16) of a weighing machine, mounted on a mounting (28) relative to a stationary environment (18), and
- the at least one measuring device (32) is adapted to determine forces acting on the vehicle (12) with reference to the tendency of the platform (16) to move relative to the stationary environment (18).

2. A test stand according to claim 1,
**characterised in that** the platform is movably, especially floatingly, mounted relative to the stationary environment (18) by means of the mounting (28).

3. A test stand according to claim 1 or claim 2,
**characterised in that** the mounting (28) of the platform (16) comprises at least one hydrostatic bearing (30).

4. A test stand according to any of claims 1 to 3,
**characterised in that** the mounting (28) of the platform (16) comprising at least one piezoelectric force transducer which especially is also adapted as a measuring device for determination of forces acting on the platform (16) relative to the stationary environment (18).

5. A test stand according to any of claims 1 to 4,
**characterised in that** the at least one measuring device (32), in order to determine forces acting on the vehicle, comprises at least one load cell (34 to 38) for determination of forces parallel to the plane (50) of the vehicle, especially for determining at least one force (Fx) in the direction of travel (52) and/or at least two forces (Fy1, Fy2) transversely of the direction of travel (52).

6. A test stand according to any of claims 1 to 5,
**characterised in that** the at least one measuring device (32), in order to determine forces acting on the vehicle, comprises at least one load cell (40 to 46) for determination of forces (Fz) in the direction of the vertical axis (56) of the vehicle (12) at the contact surfaces (26), and the said load cell (40 to 46) especially determines forces (Fz) exerted by the vehicle (1 2) relative to the platform (16).

7. A test stand according to any of claims 1 to 6,
**characterised in that** at least one device (48) for fixing the vehicle (12) is provided and the device (48) fixes the vehicle (12) relative to the platform (16).

8. An aerodynamic method of measuring vehicles (12) in the following steps:
receiving the weight of the vehicle of at least one contact surface (26), simulating the road under the vehicle (12) by means of a moving pavement (14), and determination of forces acting on the vehicle (12),
**characterised by** the following steps:
- constructing the contact surfaces (26) in the form of the moving pavement (14) for simulating the road moving under the vehicle (12), in that the width of the moving pavement (14) is greater than the width of the vehicle (12),
- supporting the single moving pavement (14) in its entirety on a platform (16) of a weighing machine and mounting the platform (16) relative to a stationary environment (18), and
- determining the forces acting on the vehicle (12) with reference to the tendency of the platform (16) to move relative to the stationary environment (18).

9. A method according to claim 8,
**characterised by** a movable, especially floating, mounting of the platform (16) relative to the stationary environment (18).

10. A method according to claim 8 or claim 9,
**characterised in that** the process of determining forces acting on the vehicle (12) comprises determination of forces on the platform (16) relative to the stationary environment (18) parallel to the plane (50) of the vehicle, especially determination of at least one force (Fx) in the direction of travel (52) and/or at least two forces (Fy1, Fy2) transversely of the direction of travel (52).

11. A method according to any of claims 8 to 10,
**characterised in that** determination of forces acting on the vehicle (12) comprises determination of forces (Fz) on the vehicle (12) relative to the stationary environment (18) in the direction of the vertical axis (56) of the vehicle at the contact surfaces (26), especially determination of said forces (Fz) on the vehicle (12) relative to the platform (16).

12. A method according to any of claims 8 to 10,
**characterised by** fastening the vehicle (12) relative to the platform (16).

## Revendications

1. Banc d'essai (10) pour des mesures aérodynamiques sur des véhicules (12) comportant au moins une surface de support (26) pour recevoir le poids du véhicule, une bande de circulation (14) pour simuler la chaussée qui se déplace sous le véhicule (12) et au moins une installation de mesure (32) pour déterminer les efforts exercés sur le véhicule (12),
**caractérisé par**
- une unique bande de circulation (14) pour simuler la chaussée, dont la largueur est supérieure à la largueur du véhicule (12) pour réaliser aussi sur la bande de circulation (14) les surfaces de support (26) recevant le poids du véhicule (12) posé sur la bande de circulation (14),
- l'unique bande de circulation (14) est installée en totalité sur un tablier de balance (16) monté sur un palier (28) par rapport à un environnement fixe (18), et
- au moins l'installation de mesure (32) détermine les efforts exercés sur le véhicule (12) à l'aide de la tendance à bouger du tablier de balance (16) par rapport à l'environnement fixe (18).

2. Banc d'essai selon la revendication 1,
**caractérisé en ce que**
le palier (28) assure le montage coulissant notamment flottant du tablier de balance (16) par rapport à l'environnement fixe (18).

3. Banc d'essai selon l'une des revendications 1 ou 2,
**caractérisé en ce que**
le palier (28) du tablier de balance (16) est muni d'au moins un palier hydrostatique (30).

4. Banc d'essai selon l'une des revendications 1 ou 3,
**caractérisé en ce que**
le palier (28) du tablier de balance (16) est équipé d'au moins un dynamomètre piézoélectrique réalisé également comme installation de mesure pour déterminer les efforts exercés sur le tablier de balance (16) par rapport à l'environnement fixe (18).

5. Banc d'essai selon l'une des revendications 1 ou 4,
**caractérisé en ce qu'**
au moins l'installation de mesure (32) servant à déterminer les efforts agissant sur le véhicule comporte au moins un peson (34-38) pour déterminer les efforts parallèles au plan (50) de la chaussée, notamment au moins une force (Fx) dans la direction de circulation (52) et/ou deux forces (Fy1, Fy2) transversales à la direction de déplacement (52).

6. Banc d'essai selon l'une des revendications 1 ou 5,
**caractérisé en ce que**
au moins l'installation de mesure (32) servant à déterminer les efforts agissant sur le véhicule comporte au moins un peson (40-46) pour déterminer les efforts (Fz) dans la direction de l'axe vertical (56) du véhicule (12) par rapport aux surfaces de support (26) et ces pesons (40-46) déterminent les efforts (Fz) du véhicule (12) par rapport au tablier de balance (16).

7. Banc d'essai selon l'une des revendications 1 ou 6,
**caractérisé**
**par** au moins une installation de blocage (48) pour bloquer le véhicule (12) et cette installation de blocage (48) bloque le véhicule (12) par rapport au tablier de balance (16).

8. Procédé de mesure aérodynamique appliqué à des véhicules (12) et comprenant des étapes suivantes consistant à :
- saisir le poids du véhicule en au moins une surface de support (26),
- simuler la chaussée qui se déplace sous le véhicule (12) à l'aide d'une bande de circulation (14), et
- déterminer les efforts agissant sur le véhicule (12),
**caractérisé par** les étapes suivantes consistant à :
- réaliser les surfaces de support (26) avec la bande de circulation (14) pour simuler la chaussée qui se déplace sous le véhicule (12) la largueur de la bande de circulation (14) étant supérieure à la largueur du véhicule (12),
- soutenir l'ensemble et l'unique bande de circulation (14) par un tablier de balance (16) et monter le tablier de balance (16) par rapport à un environnement fixe (18), et
- déterminer les efforts exercés sur le véhicule (12) à l'aide de la tendance au mouvement du tablier de balance (16) par rapport à l'environnement fixe (18).

9. Procédé selon la revendication 8,
**caractérisé par**
un palier coulissant notamment flottant, du tablier de balance (16) par rapport à l'environnement fixe (18).

10. Procédé selon l'une des revendications 8 ou 9,
**caractérisé en ce que**
déterminer les efforts agissant sur le véhicule (12) consiste à déterminer les efforts du tablier de balance (16) par rapport à l'environnement fixe (18) parallèlement au plan (50) de la chaussée notamment déterminer au moins une force (Fx) dans la direction de circulation (52) et/ou au moins deux forces (Fy1, Fy2) transversalement à la direction de déplacement (52).

11. Procédé l'une des revendications 8 ou 10,
**caractérisé en ce que**
déterminer les efforts exercés sur le véhicule (12) consiste à déterminer les efforts (Fz) du véhicule (12) par rapport à l'environnement fixe (18) dans la direction de l'axe vertical (56) du véhicule au niveau des surfaces de supports (26) notamment déterminer les efforts (Fz) du véhicule (12) par rapport au tablier de balance (16).

12. Procédé l'une des revendications 8 ou 10,
**caractérisé en ce qu'**
on bloque le véhicule (12) par rapport au tablier de balance (16).
